# EUROPÄISCHE PATENTANMELDUNG

(11) **EP 2 003 366 A2**
(43) Veröffentlichungstag der Anmeldung: **17.12.2008**
(21) Anmeldenummer: 08153745.8
(22) Anmeldetag: 31.03.2008
(51) Int. Cl.: F16F 9/46

(54) **Schwingungsdämpfer mit verstellbarem Dämpfventil**

(30) Priorität: 13.06.2007 DE 102007027813
(71) Anmelder: ZF Friedrichshafen AG, 88038 Friedrichshafen (DE)
(72) Erfinder: Sieber, Andreas, 97422 Schweinfurt (DE); Heyn, Steffen, 97464 Niederwerrn (DE); Manger, Thomas, 97535 Wasserlosen-Kaisten (DE); Zwirlein, Thomas, 97453 Schonungen (DE)

(57) **Zusammenfassung**

Schwingungsdämpfer mit verstellbarem Dämpfventil (27), umfassend einen Aktuator, mit dem eine auf einen Ventilkörper wirkende Stellkraft beeinflusst werden kann, wobei eine Betriebsbewegung des Ventilkörpers (35) über eine hydraulische Dämpfeinrichtung gedämpft wird, in dem ein Verdrängerkörper (54) mit einem Dämpfraum (57) zusammenwirkt, wobei zwischen dem Verdrängerkörper und dem Dämpfraum ein Ringspalt vorliegt; der von einer Ringdichtung (61) abgedichtet wird und der Dämpfraum mit einer Dämpfkraft erzeugenden Drossel (65) ausgeführt ist.

## Beschreibung

Die Erfindung betrifft einen Schwingungsdämpfer mit verstellbarem Dämpfventil gemäß dem Oberbegriff von Patentanspruch 1.

Aus der DE 10 2004 011 573 A1 ist bereits das Problem bekannt, dass ein Ventilkörper innerhalb eines verstellbaren Dämpfventils Schaltgeräusche verursachen kann. Als Lösung wird der Ventilkörper als Verdränger eingesetzt, der mit einer Wandung des Steuerraums einen hydraulischen Endanschlag bildet, der der Ventilkörperschließbewegung entgegenwirkt. In dem Steuerraum ist eine wannenförmige Vertiefung innerhalb eines Trennbodens ausgeführt. Die Vertiefung bildet mit dem Ventilkörper einen Ringkanal, über den Dämpfmedium aus der Vertiefung verdrängt wird. Zwischenzeitlich hat sich gezeigt, dass dieses Bauprinzip in seiner Wirkung sehr stark von den Fertigungstoleranzen des Außendurchmessers des Ventilkörpers und von dem Innendurchmesser der wannenförmigen Vertiefung abhängt. In der Anwendung eines Schwingungsdämpfers kann die geforderte Fertigungsgenauigkeit nicht realisiert werden, da der Kostenaufwand nicht mehr angemessen wäre.

Die Aufgabe der vorliegenden Erfindung besteht darin, die bei der Betriebsbewegung des Ventilkörpers des verstellbaren Dämpfventils auftretenden Schaltgeräusche zu minimieren, wobei der Fertigungsaufwand in einem vernünftigen Verhältnis zum Gesamtprodukt stehen soll.

Erfindungsgemäß wird die Aufgabe dadurch gelöst, der Ringspalt zwischen dem Verdrängerkörper und dem Dämpfraum von einer Ringdichtung abgedichtet wird und der Dämpfraum mit einer Dämpfkraft erzeugenden Drossel ausgeführt ist.

Mit der Drossel, die beispielsweise von einer sehr kleinen Bohrung gebildet wird, kann sehr präzise eine gedämpfte Öffnungs- und Schließbewegung des Ventilkörpers erreicht werden. Neben der hydraulischen Dämpfwirkung der Drossel ist noch die Reibungsdämpfung der Ringdichtung nutzbar, deren Größe unabhängig von der Öffnungs- und Schließbewegung des Ventilkörpers zur Verfügung steht.

In weiterer vorteilhafter Ausgestaltung wird der Dämpferraum von dem Ventilkörper gebildet, der topfförmig ausgeführt ist. Es sind keine weiteren Bauteile notwendig, die an dem Ventilkörper zu befestigen wären.

Gemäß einem vorteilhaften Unteranspruch wird der Verdrängerkörper von einem bolzenartigen Element gebildet. Das bolzenartige Element kann z. B. von einem Niet oder auch einer Schraube gebildet werden. Dadurch wird eine leichte Anpassung des Verdrängerkörpers an verschiedene Ventilkörper erreicht, ohne dass tiefe konstruktive Eingriffe in das verstellbare Dämpfventil notwendig wären.

Das bolzenartige Element übernimmt als Teil eines weiteren Dämpfventils, das mit dem verstellbaren Dämpfventil zusammenwirkt, eine Zusatzfunktion

So kann sich an dem bolzenartigen Element mindestens eine Ventilscheibe des weiteren Dämpfventils abstützen.

Prinzipiell besteht die Möglichkeit, dass der Ventilkörper von dem Aktuator des verstellbaren Dämpfventils direkt angesteuert wird. Alternativ wird der Ventilkörper jedoch auch mittels eines Vorsteuerventils in Verbindung mit einem druckbeaufschlagten Steuerraum betätigt. Wenn der Ventilkörper von einem Steuerdruck in einem Steuerraum des verstellbaren Dämpfventils beaufschlagt wird, wobei zwischen einem Arbeitsraum des Schwingungsdämpfers und dem Steuerraum eine unabhängig vom Betriebszustand des Ventilkörpers offene Anschlussöffnung eine Strömungsverbindung bildet, dann ist diese Anschlussöffnung außerhalb des Dämpfraums des Ventilkörpers ausgeführt.

Durch die räumliche Trennung der Drossel von der Anschlussöffnung soll eine funktionale Abhängigkeit der Vorsteuerventilfunktion von der gedämpften Ventilkörperbewegung vermieden werden.

Anhand der folgenden Figurenbeschreibung soll die Erfindung näher erläutert werden.

Es zeigt:
- Fig. 1: Schwingungsdämpfer verstellbarem Dämpfventil
- Fig. 2: Verstellbares Dämpfventil in einer Schnittdarstellung
- Fig. 3: Ausschnitt aus Fig. 2

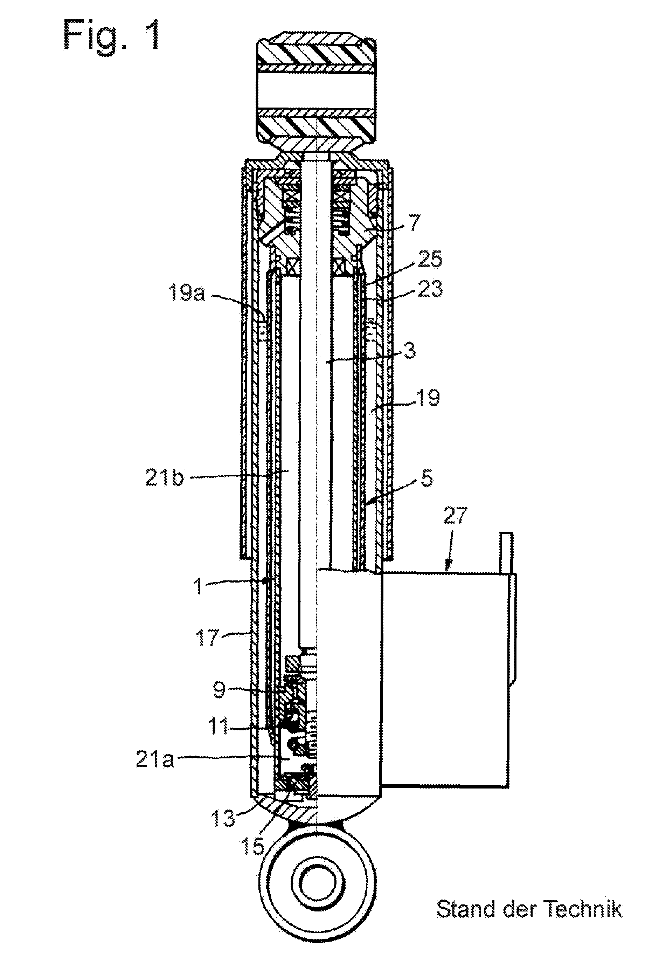

In Fig. 1 weist ein Schwingungsdämpfer einen Zylinder 1 auf, in dem eine Kolbenstange 3 axial beweglich angeordnet ist. Eine Führungs- und Dichtungseinheit 7 führt die Kolbenstange 3 aus dem oberen Ende des Zylinders heraus. Innerhalb des Zylinders 1 ist an der Kolbenstange 3 eine Kolbeneinheit 9 mit einer Kolbenventilanordnung 11 befestigt. Das untere Ende des Zylinders 1 ist durch eine Bodenplatte 13 mit einer Bodenventilanordnung 15 abgeschlossen. Der Zylinder 1 wird von einem Behälterrohr 17 umhüllt. Das Behälterrohr 17 und ein Zwischenrohr 5 bilden einen Ringraum 19, der eine Ausgleichskammer darstellt. Der Raum innerhalb des Zylinders 1 ist durch die Kolbeneinheit 9 in eine erste Arbeitskammer 21 a und eine zweite Arbeitskammer 21 b unterteilt. Die Arbeitskammern 21 a und 21 b sind mit Dämpfflüssigkeit gefüllt. Die Ausgleichskammer 19 ist bis zu dem Niveau 19a mit Flüssigkeit und darüber mit Gas gefüllt. Innerhalb der Ausgleichskammer 19 ist eine erste Leitungsstrecke, nämlich eine Hochdruckteilstrecke 23, gebildet, welche über eine Bohrung 25 des Zylinders 1 mit der zweiten Arbeitskammer 21 b in Verbindung steht. An diese Hochdruckteilstrecke schließt sich ein seitlich an dem Behälterrohr 17 angebautes verstellbares Dämpfventil 27 an. Von dieser führt, nicht dargestellt, eine zweite Leitungsstrecke, nämlich eine Niederdruckteilstrecke 29, in die Ausgleichskammer 19.

Fährt die Kolbenstange 3 aus dem Zylinder 1 nach oben aus, verkleinert sich die obere Arbeitskammer 21 b. Es baut sich in der oberen Arbeitskammer 21 b ein Überdruck auf, der sich nur durch die Kolbenventilanordnung 11 in die untere Arbeitskammer 21 a abbauen kann, solange das verstellbare Dämpfventil 27 geschlossen ist. Wenn das verstellbare Dämpfventil 27 geöffnet ist, so fließt gleichzeitig Flüssigkeit von der oberen Arbeitskammer 21 b durch die Hochdruckteilstrecke 23 und das verstellbare Dämpfventil 27 in die Ausgleichskammer 19. Die Dämpfcharakteristik des Schwingungsdämpfers beim Ausfahren der Kolbenstange 3 ist also davon abhängig, ob das verstellbare Dämpfventil 27 mehr oder weniger offen oder geschlossen ist.

Wenn die Kolbenstange 3 in den Zylinder 1 einfährt, so bildet sich in der unteren Arbeitskammer 21 a ein Überdruck. Flüssigkeit kann von der unteren Arbeitskammer 21 a durch die Kolbenventilanordnung 11 nach oben in die obere Arbeitskammer 21 b übergehen. Die durch das zunehmende Kolbenstangenvolumen innerhalb des Zylinders 1 verdrängte Flüssigkeit wird durch die Bodenventilanordnung 15 in die Ausgleichskammer 19 ausgetrieben. In der oberen Arbeitskammer 21 b tritt, da der Durchflusswiderstand der Kolbenventilanordnung 11 geringer ist als der Durchflusswiderstand der Bodenventilanordnung 15, ebenfalls ein steigender Druck auf. Dieser steigende Druck kann bei geöffnetem Dämpfventil 27 durch die Hochdruckteilstrecke 23 wiederum in den Ausgleichsraum 19 überfließen. Dies bedeutet, dass bei geöffnetem Dämpfventil 27 der Stoßdämpfer auch beim Einfahren dann eine weichere Charakteristik hat, wenn das verstellbare Dämpfventil 27 geöffnet ist und eine härtere Charakteristik, wenn das Dämpfventil 27 geschlossen ist, genauso wie beim Ausfahren der Kolbenstange. Festzuhalten ist, dass die Strömungsrichtung durch die Hochdruckteilstrecke 23 des Bypasses immer die gleiche ist, unabhängig davon, ob die Kolbenstange ein- oder ausfährt.

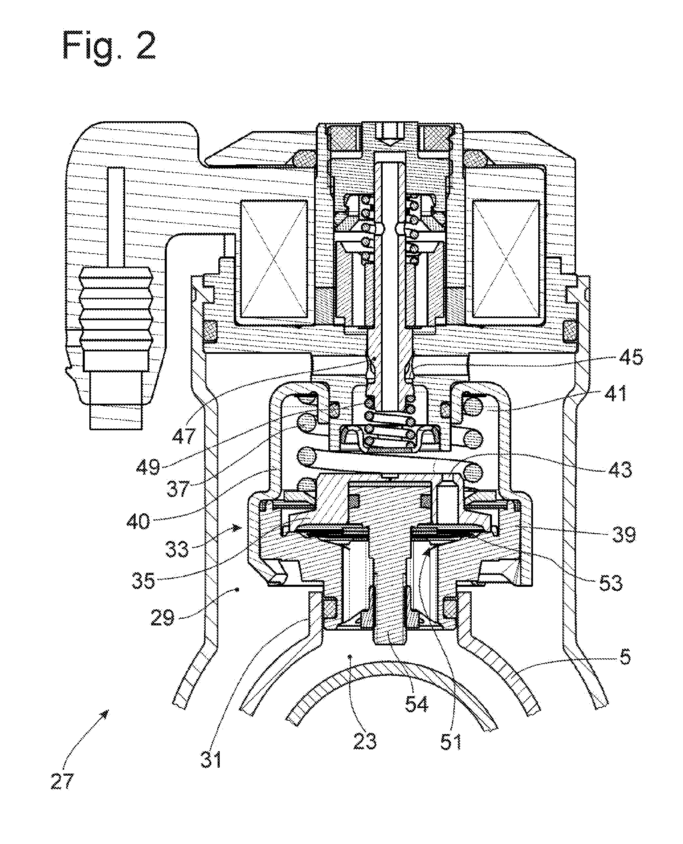

Die Fig. 2 zeigt das erfindungsgemäße verstellbare Dämpfventil 27 in einer Schnittdarstellung. Die Hochdruckteilstrecke 23 ist über einen Rohrstutzen 31 des Zwischenrohres 5 an ein Hauptstufenventil 33 als Baugruppe des verstellbaren Dämpfventils 27 angeschlossen. Das Hauptstufenventil verfügt über einen Hauptstufenventilkörper 35, im weiteren Ventilkörper genannt, den eine Feder 37 auf eine Zwischenwandung 39 vorspannt. Die Zwischenwandung 39 begrenzt zusammen mit einem Gehäuse 40 einen mit Dämpfflüssigkeit gefüllten Steuerraum 41, dessen Druckkraft auf die Rückseite des Ventilkörpers 35 wirkt. Innerhalb des Ventilkörpers ist eine Anschlussöffnung 43 ausgeführt, über die Dämpfflüssigkeit aus der Hochdruckstrecke 23 in den Steuerraum 41 einströmen kann. Das Druckniveau im Steuerraum kann durch ein Vorstufenventil 45 bestimmt werden, das von einem Aktuator, z. B. einer Magnetspule, angesteuert wird. In diesem Fall wird ein Vorstufenventilkörper 47 von dem Aktuator gegen die Kraft mindestens einer Feder 49 axial bewegt. Durch einen gezielten Steuerkammerabfluss in die Niederdruckteilstrecke 29 kann die Druckkraft im Steuerraum festgelegt werden.

In der vorliegenden Ausführung des verstellbaren Dämpfventils 27 ist dem Ventilkörper 35 in der Hochdruckteilstrecke 23 ein weiteres Dämpfventil 51 vorangestellt, das mindestens eine elastische Ventilscheibe 53 aufweist. Das weitere Dämpfventil ist optional einsetzbar. Die mindestens eine Ventilscheibe stützt sich an einem bolzenartigen Element 54 ab, dass mit der Zwischenwandung 39 fixiert ist. Als bolzenartiges Element ist beispielsweise eine Schraube oder ein Niet denkbar.

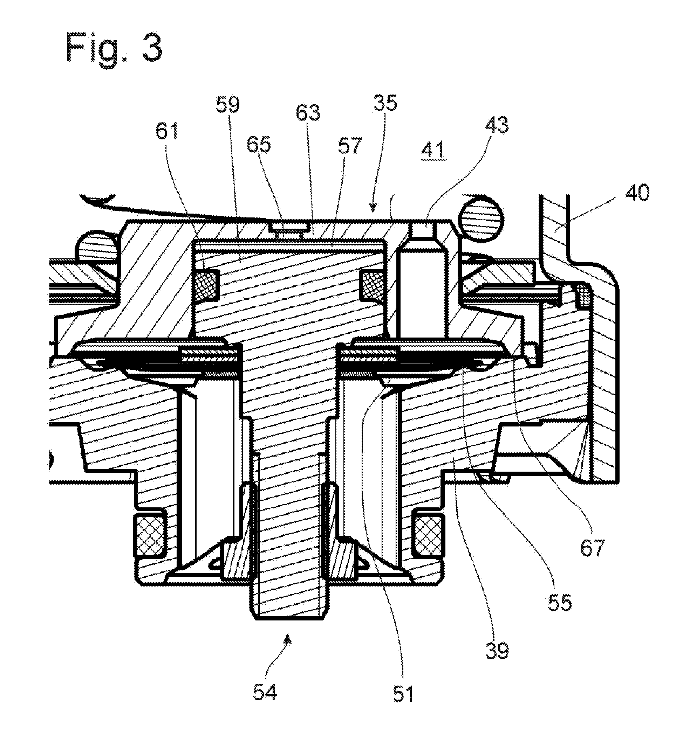

In der Fig. 3 ist der Bereich des verstellbaren Dämpfventils mit dem Ventilkörper 35 vergrößert dargestellt. Der Ventilkörper 35 verfügt über einen in Richtung der Zwischenwandung geöffneten topfförmigen Querschnitt. Der Rand des Ventilkörpers umschließt eine Sitzfläche 55 auf der Zwischenwand 39 für das weitere Dämpfventil 51. Der topfförmige Querschnitt des Ventilkörpers 35 bildet einen Dämpfraum 57 , der einen Verdrängerkörper, nämlich das bolzenartige Element 54 aufnehmen kann. Ein Kopf 59 des Verdrängerkörpers 54 bildet die Führungsfläche für den Ventilkörper 35 , wobei ein fertigungsbedingter Ringspalt zwischen dem Kopf des Verdrängerkörpers und dem Ventilkörper mittels einer Ringdichtung 61 verschlossen wird.

In einem Boden 63 des Ventilkörpers 35 ist mindestens eine eine Dämpfkraft erzeugende Drossel 65 ausgeführt, über die die Dämpfflüssigkeit innerhalb des Dämpfraums 57 mit dem Steuerraum 41 in Verbindung steht. Die Anschlussöffnung 43 ist von der Drossel 65 des Dämpfraums 57 getrennt ausgeführt, d. h. die Anschlussöffnung steht in keiner Verströmungsverbindung zum Dämpfraum, sondern ist radial außerhalb des Dämpfungsraums angeordnet. Sowohl die Anschlussöffnung 43 wie auch die Drossel 65 weisen permanent geöffnete Durchlassquerschnitte auf.

Bei einer Öffnungsbewegung des Ventilkörpers 35 hebt dieser von einer Ventilsitzfläche 67 auf der Zwischenwand 39 ab. Dabei vergrößert sich das Volumen des Dämpfraums, indem der Abstand der Stirnfläche des bolzenartigen Elements und dem Boden 63 des Ventilkörpers wächst. Auch bei geschlossenem Ventilkörper besteht zwischen der Stirnfläche des bolzenartigen Elements und dem Boden des Ventilkörpers noch ein Mindestabstand, um einerseits einen Klebeeffekt zwischen dem Ventilkörper und dem bolzenartigen Element zu vermeiden und anderseits zu gewährleisten, dass der Ventilkörper garantiert eine Schließposition einnehmen kann und nicht schon vorher auf dem bolzenartigen Element zur Anlage kommt. Mit der Öffnungsbewegung fließt Dämpfflüssigkeit aus dem Steuerraum 41 über die Drossel in den Dämpfraum 57. Zwischen dem Steuerraum 41 und dem Dämpfraum 57 besteht ein Differenzdruck, dessen Kraft der Öffnungsbewegung des Ventilkörpers 35 entgegenwirkt.

Steigt der Druck im Steuerraum 41, z. B. durch Schließen des Vorstufenventils 45, dann steigen auch die auf den Ventilkörper 35 wirksamen Schließkräfte. Aus einer ggf. geöffneten Abhubstellung des Ventilkörpers führt dieser eine Schließbewegung aus. Dabei verringert sich das Volumen des Dämpfraums 57 aufgrund des in den Ventilkörper einfahrenden Verdrängers 54, wobei die in dem Dämpfraum befindliche Dämpfflüssigkeit über die Drossel in den Steuerraum verdrängt wird und die dabei auftretende Dämpfkraft einer allzu abrupten Schließbewegung des Ventilkörpers entgegenwirkt. Die Abhubbewegung des Ventilkörpers ist stets kleiner als die Bauhöhe des Kopfes des bolzenartigen Elements.

Neben der hydraulischen Dämpfkraft, erzeugt durch die Drossel 65, wirkt auch die Reibung an der Ringdichtung 61, wobei die Ringdichtung wahlweise in dem bolzenartigen Element 54 oder in der Innenwandung des Ventilkörpers 35 zum Dämpfraum 57 ausgeführt sein kann.

## Patentansprüche

1. Schwingungsdämpfer mit verstellbarem Dämpfventil, umfassend einen Aktuator, mit dem eine auf einen Ventilkörper wirkende Stellkraft beeinflusst werden kann, wobei eine Betriebsbewegung des Ventilkörpers über eine hydraulische Dämpfeinrichtung gedämpft wird, in dem ein Verdrängerkörper mit einem Dämpfraum zusammenwirkt, wobei zwischen dem Verdrängerkörper und dem Dämpfraum ein Ringspalt vorliegt;
**dadurch gekennzeichnet,**
**dass** der Ringspalt zwischen dem Verdrängerkörper (54) und dem Dämpfraum (57) von einer Ringdichtung (61) abgedichtet wird und der Dämpfraum (57) mit einer Dämpfkraft erzeugenden Drossel (59) ausgeführt ist.

2. Schwingungsdämpfer nach Anspruch 1,
**dadurch gekennzeichnet,**
**dass** der Dämpferraum (57) von dem Ventilkörper (35) gebildet wird, der topfförmig ausgeführt ist.

3. Schwingungsdämpfer nach Anspruch 1,
**dadurch gekennzeichnet,**
**dass** der Verdrängerkörper von einem bolzenartigen Element (54) gebildet wird.

4. Schwingungsdämpfer nach Anspruch 3,
**dadurch gekennzeichnet,**
**dass** das bolzenartige Element (54) Teil eines weiteren Dämpfventils (51) ist, das mit dem verstellbaren Dämpfventil (27) zusammenwirkt.

5. Schwingungsdämpfer nach Anspruch 4,
**dadurch gekennzeichnet,**
**dass** sich an dem bolzenartigen Element (54) mindestens eine Ventilscheibe (53) des weiteren Dämpfventils (51) abstützt.

6. Schwingungsdämpfer nach Anspruch 1,
**dadurch gekennzeichnet,**
**dass** der Ventilkörper (35) von einem Steuerdruck in einem Steuerraum (41) des verstellbaren Dämpfventils (27) beaufschlagt wird, wobei zwischen einem Arbeitsraum 21 a; 21 b) des Schwingungsdämpfers (1) und dem Steuerraum (41) eine unabhängig vom Betriebszustand des Ventilkörpers (35) offene Anschlussöffnung (43) eine Strömungsverbindung bildet, wobei diese Anschlussöffnung (43) außerhalb des Dämpfraums (57) des Ventilkörpers (35) ausgeführt ist.
